# EUROPEAN PATENT APPLICATION

(11) **EP 1 630 453 A2**
(43) Date of publication of application: **01.03.2006**
(21) Application number: 05254350.1
(22) Date of filing: 12.07.2005
(51) Int. Cl.: F16G 13/06

(54) **A roller chain**

(30) Priority: 24.08.2004 GB 0418825; 11.03.2005 GB 0505033
(71) Applicant: RENOLD Plc, Wythenshawe Manchester M22 5WL (GB)
(72) Inventor: Lodge, Christopher James, Glossop Derbyshire SK13 1LP (GB)
(74) Representative: Every, David Aidan

(57) **Abstract**

A roller chain for high load applications has a pin (16) with a diameter that is larger than the pin of an ANSI chain of the same pitch but the chain still falls within the spatial envelope of the ANSI chain so that it can be used on a standard ANSI sprocket. The roller (15) and bush (14) are of reduced thickness in comparison to an equivalent ANSI heavy series chain.

## Description

### BACKGROUND OF THE INVENTION

The present invention relates to a roller chain and in particular to a roller chain that has a relatively high load capacity.

Roller chains are typically used in power transmission applications and comprise a plurality of overlapping chain link plates that are interconnected by transverse pins. The link plates are arranged in opposed, spaced, parallel stands of overlapping inner and outer link plates. Each link plate has a pair of apertures and is connected to an adjacent link plate in the same strand by a pin that passes through aligned apertures. The same pin interconnects a second pair of such link plates in the other strand. The inner link plates are free to articulate on the pins whereas the outer link plates are fixed by means of, for example, an interference fit. The opposed inner link plates are joined by transverse bushes that are received in the apertures and through which the pins pass. A roller is rotatably disposed on the bush.

In the United States of America the standards for power transmission chains of this kind are defined in ANSI B29.1. For applications where the chain drive is subjected to relatively high loads and low speeds, heavy shock loading or frequent stopping and starting, ANSI heavy series chains are generally adopted as they are specifically designed to withstand higher tensile and fatigue loading. Such chains generally have link plates that are thicker than normal and pins that are through hardened. Whilst these features increase the tensile strength of the chain (and therefore raise its breaking load) and the resistance to fatigue failure and thus allow the chain to be used at a higher load, they suffer from the fact that they have reduced wear resistance compared with a case hardened pin and have increased weight. This renders them unsuitable for high-speed applications.

In general the tensile strength of a chain is determined by the strength of the link plates and the pin. If a higher strength chain is required in any particular application the solution is usually to select a chain of larger pitch in which the link plates are thicker and the pins larger. This can be problematic in relation to existing drives as changing the chain for one of larger pitch means not only replacing the sprockets but often also entails the modification of a large number of parts of the apparatus or other structure surrounding the chain drive. Thus the scope for making structural changes to a given ANSI chain design to improve its tensile and fatigue strength is limited as it must still occupy the same spatial envelope of a standard ANSI chain of the same size and also be configured to engage with an ANSI standard sprocket (i.e. it must have the same pitch, at least).

An alternative approach is to increase the diameter of the pin without increasing the pitch of the chain, but this entails a commensurate increase in the diameters of the bush and the roller and generally takes the chain outside the spatial envelope of a standard ANSI chain such that it cannot be used with an ANSI standard sprocket and may be usable in confined spaces. Rather than have the expense of producing a specifically redesigned sprocket, some manufacturers have taken to eliminating the bush from the chain so that the roller fits directly on to the pin which can then be increased in diameter to fill some of the resulting space but this compromises the performance of the chain in terms of wear resistance since the bearing area on the pin is now only the width of the plates, rather than the length of the bush. Since such heavy chains are already prone to wear this further limits the speed at which the chain can be used.

It is an object of the present invention to obviate or mitigate the aforesaid disadvantages.

### SUMMARY OF THE INVENTION

According to a first aspect of the present invention there is provided a roller chain having a longitudinal axis and comprising a plurality of chain link members, a plurality of substantially cylindrical pins interconnecting the link members, the link members being arranged along the longitudinal axis of the chain into inner link members that are flanked on each side by outer link members, the outer link members extending between adjacent inner link members, a pair of apertures defined in each of the link members, the inner and outer link members being arranged such that they partly overlap so that respective apertures of each member are in alignment, the inner and outer link members being interconnected by the transverse pins that are received in the aligned apertures, the inner link members each comprising a pair of opposed inner link plates and bushes that are received in the apertures of the inner link plates and serve to join together the opposed inner link plates, the bushes being arranged so as to receive the transverse pins, the bushes being rotatable on said transverse pins so as to allow the inner link members to articulate relative to the outer link members, the outer link members being fixed to said pins, and a roller rotatably disposed on each bush, wherein the height of the inner link plate in a direction substantially perpendicular to the longitudinal direction of the chain is substantially 90% of the pitch of the chain and wherein the diameter of the pin is in the range 56% to 61.5% of the outside diameter of the roller.

The invention thus provides for an ANSI heavy series style chain that can withstand use at a load more suited to the next largest pitch of ANSI heavy series chain without compromising chain wear.

The diameter of the pin is preferably in the range 56.5% to 60% of the outside diameter of the roller, more preferably still in the range 57% to 58.5% and ideally about 57%.

The outside diameter of the bush is preferably in the range 77.5 to 82% of the outside diameter of the roller, more preferably in the range 79% to 80% and ideally about 80%.

The outer link members are preferably in the form of plates that may be substantially same height and length as the inner link plates.

Ideally the chain, in use, occupies the same spatial envelope as an ANSI chain of equivalent size.

The outer link plates preferably have a waisted section of reduced plate height, but alternatively may have parallel and substantially straight edges.

According to a second aspect of the present invention there is provided a roller chain comprising a plurality of chain link members and a plurality of transverse pins that interconnect said link members, the link members being arranged into inner link members that are flanked on each side by outer link members, the outer link members extending between adjacent inner link members, a pair of apertures defined by each of the link members and the inner and outer link members being arranged such that they partly overlap and respective apertures of each member are aligned, the inner and outer members being interconnected by the transverse pins that are received in the aligned apertures, the inner link members each comprising a pair of opposed inner link plates and bushes that are received in the apertures of the inner link plates and serve to join together the opposed inner link plates, the bushes being arranged so as to receive the transverse pins, the bushes being rotatable on said transverse pins so as to allow the inner link members to articulate relative to the outer link members, the outer link members being fixed to said pins, and a roller rotatably disposed on each bush, wherein the diameter of the pins is larger than the diameter of the pins of an ANSI chain of a corresponding chain pitch.

The thickness of the bush is preferably less than that of an ANSI chain of a corresponding size and the thickness of the roller is preferably less than that of an ANSI chain of a corresponding size. Thus the chain is designed to occupy, in use, the same spatial envelope as an ANSI chain of equivalent size and can be used on the same sprocket as one designed for an equivalent size ANSI chain.

### DESCRIPTION OF THE DRAWINGS

A specific embodiment of the present invention will now be described, by way of example only, with reference to the accompanying drawings in which:
Figure 1 is a side view of part of a prior art ANSI standard heavy series roller chain;
Figure 2 is a plan view of the chain of figure 1;
Figure 3 is a section through the pin, bush and roller of the chain of figure 1;
Figure 4 is a side view of part of a chain according to the present invention;
Figure 5 is a plan view of the chain of figure 4;
Figure 6 is a side sectioned view through the pin, bush and roller of the chain of figure 4; and
Figure 7 is a graph illustrating the results of fatigue testing a chain according to the present invention as compared to two different sized standard ANSI heavy series chains.

### DETAILED DESCRIPTION OF THE DRAWINGS

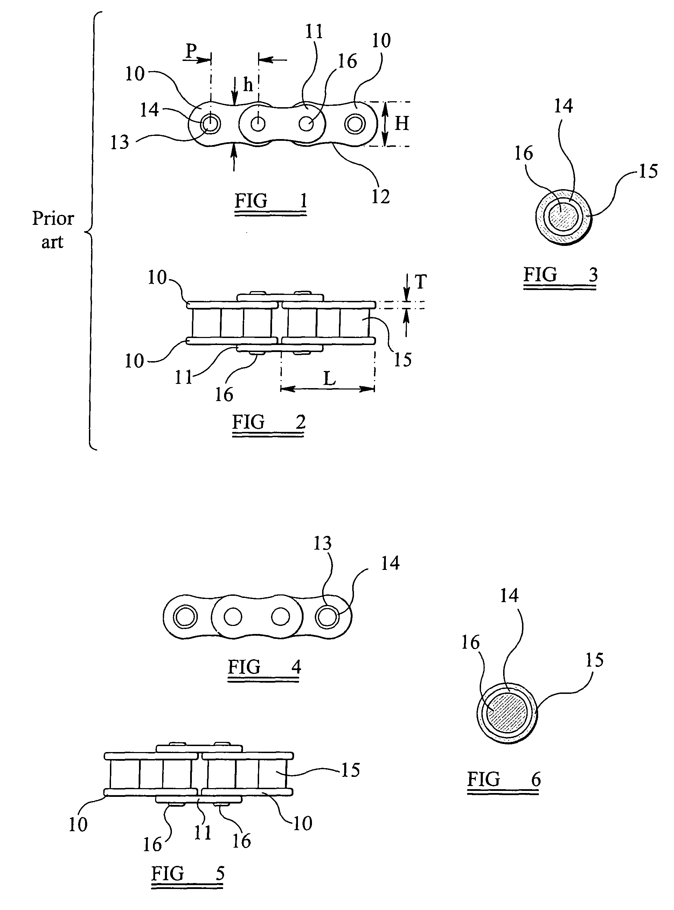

Referring now to figures 1 to 3 of the drawings, a prior art roller chain in accordance with ANSI heavy series comprises opposed pairs of inner link plates 10 that are arranged along the chain so as to alternate with opposed pairs of outer link plates 11.

Each inner link plate 10 has a general length L, thickness T and height H and two spaced apertures 13 that are spaced apart by pitch distance P. The outer link plates 11 are of similar configuration but have a slightly reduced height and length. All the link plates 10, 11 are typically formed by blanking from a sheet of steel and have an outer profile that is rounded at each end and defines a central waisted portion 12 of reduced height h as is well known. The inner link plate apertures 13 receive parallel cylindrical bushes 14 in a fixed relationship (e.g. a press-fit connection) so that the opposed inner link plates 10 are connected together. A cylindrical roller 15 is rotatably disposed on each of the bushes 14. On each side of the chain adjacent pairs of inner link plates 10 are connected to the overlapping outer link plates 11 by transverse pins 16 that pass through aligned apertures 13 in each plate and through the bushes 14. These pins 16 are an interference fit with the outer link plates 11 so that they are fixed relative thereto, but are free to rotate in the bushes so that the inner link plates 10 are free to articulate relative to the outer link plates 11. In general, an ANSI chain is characterised by the plate height H of the inner link plate 10 being approximately 90% of the chain pitch P.

The chain according to the present invention is shown in figures 4 to 6 (the same reference numerals are used as for the prior art embodiment of figures 1 to 3) and differs from the conventional ANSI chain of figures 1 to 3 in two main respects. First the relative proportions of the pin 16, bush 14 and roller 15 are different and secondly the outer link plates 11 are exactly the same size and shape as the inner link plates 10. The pin diameter is larger in comparison to an ANSI chain of the same size and the roller and bush thicknesses are reduced in comparison. However the ratio of the plate height H to the pitch P of the chain is unchanged.

The outer diameter of the pin 16 is ideally about 57% of the outer diameter of the roller but could be anywhere in the range 56% to 61.5%; whereas the outer diameter of the bush 14 is ideally about 80% of the outer diameter of the roller 15 but can be anywhere in the range 78% to 82%. This compares to figures of around 50% and 73% respectively for a conventional ANSI chain. It thus has the advantage that it can replace an ANSI chain in an existing drive and provide greater load capacity without the need to change any other aspect of the design. This has previously not been possible without significant changes to other components of the drive assembly, the materials used in the chain or compromising the wear resistance of the chain.

The link plates may be manufactured from a steel material having a suitably high tensile load capacity.

The proportions of the components of the chain of the present invention are particularly suitable for chains intended for heavy loads and relatively slow linear movement. The overall configuration of the chain and the spatial envelope it occupies is the same as that for the corresponding ANSI chain so that it may be used effectively on sprockets for ANSI standard heavy series chains

The step of reducing the thickness of the bush is somewhat counter-intuitive. As discussed previously the tendency has been to select a larger ANSI chain size if greater load capacity is required. There has been no motivation to reduce the thickness of the bush, as this would be perceived as decreasing the strength of the chain. However, it has been realised that whilst reducing the thickness of the bush reduces its strength, this can be accommodated without compromising the tensile load capacity of the chain. This is because it has been appreciated that the bush strength determines the capacity of the chain to withstand the torsional load applied by the sprocket teeth to the roller whereas the connection between the outer link plates and the pin determines the tensile load capacity of the chain.

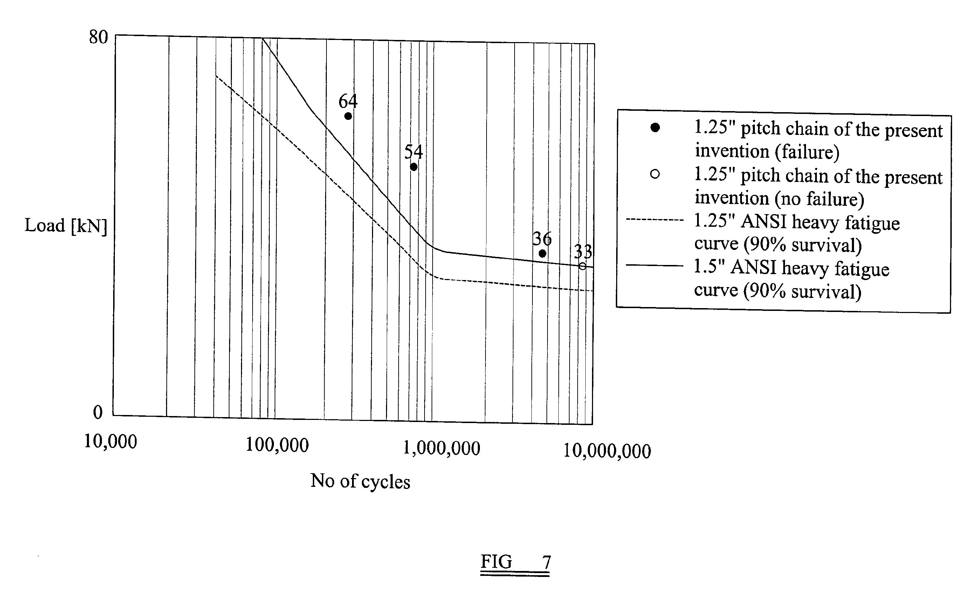

The graph of figure 7 illustrates the benefit of the chain according to the present invention as compared to similar ANSI heavy series chains. A chain according to the present invention, which has a pitch of 1.25" and was therefore designed to be used in place of a standard ANSI heavy series 1.25" pitch chain, was subjected to a conventional tensile fatigue test. A straight length of chain was repeatedly loaded and unloaded with a given load until it failed and the number of cycles of loading and unloading was recorded. This was repeated for different loads. The results are shown in the graph that plots load against the number of cycles (shown in a logarithmic scale). The results of four tests using different loads applied to a 1.25" chain of the present invention are shown. In three tests the chain failed but in the fourth at a lower magnitude of load the chain did not fail after approaching 10,000,000 load cycles. The fatigue test plots for standard 1.25" pitch and 1.5" pitch ANSI heavy chain are shown for comparison.

It will be appreciated that the relative benefits of the chain are dependent on the chain size and the test loads but it can be clearly seen from the graph that the chain of the present invention clearly out-performs the equivalent standard ANSI heavy chain and has a fatigue strength comparable to the next size (1.5") up in the range of standard ANSI heavy chain. Generally tests of this kind established that the chain of the present invention lasted around 5 to 6 more times the load cycles of the equivalent ANSI standard chain for a given loading.

## Claims

1. A roller chain having a longitudinal axis comprising a plurality of chain link members, a plurality of substantially cylindrical pins interconnecting the link members, the link members being arranged along the longitudinal axis of the chain into inner link members that are flanked on each side by outer link members, the outer link members extend between adjacent inner link members, a pair of apertures defined in each of the link members, the inner and outer link members being arranged such that they partly overlap with respective apertures in alignment, the inner and outer link members are interconnected by the transverse pins that are received in the aligned apertures, the inner link members each comprise a pair of opposed link plates and bushes that are received in the apertures of the inner link plates and serve to join together the opposed inner link plates, the bushes being arranged so as to receive the transverse pins, the bushes being rotatable on said transverse pins so as to allow the inner link members to articulate relative to the outer link members, the outer link members being fixed so said pins, and a roller rotatably disposed on each bush, wherein the height of the inner link plate in a direction substantially perpendicular to the longitudinal direction of the chain is substantially 90% of the pitch of the chain and wherein the diameter of the pin is in the range 56% to 61.5% of the outside diameter of the roller.

2. A roller chain according to claim 1, wherein the diameter of the pin is in the range 56.5% to 60% of the outside diameter of the roller.

3. A roller chain according to claim 1, wherein the diameter of the pin is in the range 57.0% to 58.5% of the outside diameter of the roller.

4. A roller chain according to claim 1, wherein the diameter of the pin is about 57% of the outside diameter of the roller.

5. A roller chain according to claim 1, wherein the outside diameter of the bush is in the range 77.5 to 82% of the outside diameter of the roller.

6. A roller chain according to claim 2, wherein the outside diameter of the bush is in the range 77.5 to 82% of the outside diameter of the roller.

7. A roller chain according to claim 3, wherein the outside diameter of the bush is in the range 77.5 to 82% of the outside diameter of the roller.

8. A roller chain according to claim 4, wherein the outside diameter of the bush is in the range 77.5 to 82% of the outside diameter of the roller.

9. A roller chain according to claim 1, wherein the outside diameter of the bush is in the range 79% to 80% of the outside diameter of the roller.

10. A roller chain according to claim 2, wherein the outside diameter of the bush is in the range 79% to 80% of the outside diameter of the roller.

11. A roller chain according to claim 4, wherein the outside diameter of the bush is in the range 79% to 80% of the outside diameter of the roller.

12. A roller chain according to claim 1, wherein the outside diameter of the bush is about 80% of the outside diameter of the roller.

13. A roller chain according to claim 4, wherein the outside diameter of the bush is about 80% of the outside diameter of the roller.

14. A roller chain according to claim 1, wherein the outer link members are plates.

15. A roller chain according to claim 1, wherein the outer link plates are substantially same height and length as the inner link plates.

16. A roller chain according to claim 1, wherein, during use, the chain occupies the same spatial envelope as an ANSI chain of equivalent size.

17. A roller chain according to claim 1, wherein the outer link plates have a waisted section of reduced plate height.

18. A roller chain comprising a plurality of chain link members and a plurality of transverse pins that interconnect said link members, the link members being arranged into inner link members that are flanked on each side by outer link members, the outer link members extending between adjacent inner link members, a pair of apertures defined by each of the link members and the inner and outer link members being arranged such that they partly overlap and respective apertures are aligned, the inner and outer members being interconnected by the transverse pins that are received in the aligned apertures, the inner link members each comprising a pair of opposed link plates and bushes that are received in the apertures of the inner link plates and serve to join together the opposed inner link plates, the bushes being arranged so as to receive the transverse pins, the bushes being rotatable on said transverse pins so as to allow the inner link members to articulate relative to the outer link members, the outer link members being fixed to said pins, and a roller rotatably disposed on each bush, wherein the diameter of the pins is larger than the diameter of the pins of an ANSI chain of a corresponding chain pitch.

19. A roller chain according to claim 18, wherein the thickness of the bush is less than that of an ANSI chain of a corresponding size.

20. A roller chain according to claim 18, wherein the thickness of the roller is less than that of an ANSI chain of a corresponding size.

21. A roller chain according to claim 18, wherein the outer link members are plates.

22. A roller chain according to claim 18, wherein the outer link plates are substantially same height and length as the inner link plates.

23. A roller chain according to claim 18, wherein, during use, the chain occupies the same spatial envelope as an ANSI chain of equivalent size.

24. A roller chain according to claim 18, wherein the outer link plates have a waisted section of reduced plate height.
